Europäisches Patentamt

European Patent Office

Office européen des brevets

(19)

(11) **EP 0 710 814 A2**

(12) **EUROPÄISCHE PATENTANMELDUNG**

(43) Veröffentlichungstag:
    08.05.1996 Patentblatt 1996/19

(51) Int. Cl.⁶: $G01B\ 7/28$

(21) Anmeldenummer: 95111783.7

(22) Anmeldetag: 26.07.1995

(84) Benannte Vertragsstaaten:
    DE FR IT

(30) Priorität: 02.11.1994 DE 4439014

(71) Anmelder: KRUPP POLYSIUS AG
    D-59269 Beckum (DE)

(72) Erfinder:
    • Abel, Paul, Dipl.-Ing.
     (DE)
    • Deventer, Bernhard, Dipl.-Ing.
     D-48165 Münster (DE)

(74) Vertreter: Tetzner, Michael, Dipl.-Ing. et al
    Van-Gogh-Strasse 3
    D-81479 München (DE)

(54) **Korrekturverfahren und Vorrichtung zu Überprüfung des Evolventenprofils eines Zahnrades**

(57)    Die Erfindung betrifft eine Vorrichtung zur Überprüfung des Evolventenprofils eines Verzahnungselementes sowie ein Verfahren zur Korrektur des Ausgangssignales eines das Evolventenprofil eines Verzahnungselementes überprüfenden Meßtasters, der in einem senkrecht zur Achse des Verzahnungselementes angeordneten X/Y-Koordinatensystem beweglich ist.

Dabei wird für zwei symmetrisch zur Mittelachse eines zu prüfenden Zahnes bzw. einer zu prüfenden Zahnlücke liegende Zahnlücken die Zahnlückentiefe in X-Richtung und/oder die Zahnlückenweite in Y-Richtung gemessen. Die Differenz der beiden Meßwerte wird zur Korrektur des Meßtasterausgangssignales verwendet.

Fig.3

**Beschreibung**

Die Erfindung betrifft ein Verfahren zur Korrektur des Ausgangssignales eines das Evolventenprofil eines Verzahnungselementes überprüfenden Meßtasters gemäß den Oberbegriffen der Ansprüche 1 und 8 sowie eine Vorrichtung zur Überprüfung des Evolventenprofils eines Verzahnungselementes gemäß dem Gattungsbegriff des Anspruchs 9.

Aus der Praxis ist ein Meßgerät gemäß dem Oberbegriff des Anspruchs 9 bekannt, das die Durchführung von Profilmessungen an Zahnrädern ermöglicht. Es besteht im wesentlichen aus einer Tasteinheit und einer Steuereinheit, wobei die Tasteinheit mit Nivellierhilfsmitteln an der Verzahnung eingerichtet wird. Die Tasteinheit enthält einen elektronischen Meßtaster, einen Kreuzschlitten mit zweiachsigem, inkrementalem Wegmeß-System sowie eine Bedienungsstation für die Steuerung beim Einrichten. Ist das zu prüfende Verzahnungselement horizontalachsig angeordnet, wird die Tasteinheit auf das Verzahnungselement aufgesetzt, wobei zur Positionierung zwei Kugelbolzen vorgesehen sind, die in zwei Zahnlücken eingreifen. Eine gerade Anzahl von Zähnen zwischen den Kugelbolzen bedeutet für das Gerät ein Messen in einer Zahnlücke, während eine ungerade Zähneanzahl das Messen an einem Zahn ermöglicht. Durch die beiden Kugelbolzen ist gewährleistet, daß eine der beiden Bewegungsrichtungen des Kreuzschlittens senkrecht zur Mittelachse des zu prüfenden Zahnes bzw. der zu prüfenden Zahnlücke verläuft.

In einer ersten Phase des Meßablaufs orientiert sich die Steuereinheit, d. h. es wird die Position des Meßtasters in dem durch den Kreuzschlitten vorgegebenen X/Y-Koordinatensystem bestimmt, wobei der Koordinatennullpunkt im Schnittpunkt der X/Y-Ebene mit der Achse des Verzahnungselements liegt. Die Schlüsselgröße für die Bestimmung des Meßtasters im X/Y-Koordinatensystem ist das Sehnenmaß zwischen den beiden Kugelbolzen, das durch das Wegmeß-System inkremental erfaßt wird. In der zweiten Phase, der eigentlichen Messung, wird der Meßtaster am Zahnprofil entlang geführt, so daß die Koordinaten der Zahnflanken ermittelt werden. Schließlich entsteht das Zahnflankendiagramm durch Vergleich zwischen den gemessenen Koordinaten und den Koordinaten der theoretischen Evolvente.

Zwar läßt sich der Meßtaster dieses bekannten Meßgeräts relativ einfach auf das zu überprüfende Verzahnungselement ausrichten, jedoch müssen hierfür aufgrund der beiden Kugelbolzen mit einem inkrementalen Wegmeßsystem große Abmessungen und ein relativ hohes Gewicht in Kauf genommen werden.

Der vorliegenden Erfindung liegt nun die Aufgabe zugrunde, das Verfahren gemäß der Oberbegriffe der Ansprüche 1 und 8 sowie die Vorrichtung gemäß dem Oberbegriff des Anspruches 9 derart weiterzuentwickeln, daß eine Vorrichtung zur Überprüfung des Evolventenprofils eines Verzahnungselementes geschaffen werden kann, die sich durch geringere Abmessungen und ein geringeres Gewicht auszeichnet.

Erfindungsgemäß wird diese Aufgabe dadurch gelöst, daß auf die beiden Kugelbolzen verzichtet wird. Dadurch bedingt ergibt sich die Schwierigkeit, daß eine der beiden Bewegungsrichtungen des Meßtasters nicht automatisch symmetrisch zur Mittelachse eines zu prüfenden Zahnes bzw. einer zu prüfenden Zahnlücke ausgerichtet ist. Um dennoch eine definierte Ansteuerung des Meßtasters in bezug auf das Verzahnungselement zu ermöglichen, wird zur Lösung der obigen Aufgabe ein Korrekturverfahren gemäß den kennzeichnenden Merkmalen der Ansprüche 1 und 8 vorgeschlagen. Bezüglich der Vorrichtung wird die gestellte Aufgabe durch die kennzeichnenden Merkmale des Anspruches 9 gelöst.

Weitere Vorteile und Ausgestaltungen der Erfindung sind Gegenstand der Unteransprüche und werden anhand einiger Ausführungsbeispiele in der nachfolgenden Beschreibung und der Zeichnung näher dargestellt.

In der Zeichnung zeigen

Fig. 1    eine Seitenansicht der an der Verzahnung angekoppelten Grundplatte,

Fig. 2    eine Aufsicht der Verschiebungseinrichtung,

Fig. 3    eine schematische Darstellung des Korrekturverfahrens mit Messung der Zahnlückenweite,

Fig. 4    eine schematische Darstellung des Korrekturverfahrens mit Messung der Zahnlückentiefe,

Fig. 5    eine schematische Darstellung des Korrekturverfahrens mit Messung der Zahndicke,

Fig. 6    eine schematische Darstellung des Korrekturverfahrens bei Messung in der Zahnlücke.

Die erfindungsgemäße Vorrichtung zur Überprüfung des Evolventenprofils eines Verzahnungselementes enthält im wesentlichen eine in X- und Y-Richtung verschiebbare Verschiebungseinrichtung 7, einen auf der Verschiebungseinrichtung angeordneten, zur Abtastung des Evolventenprofils geeigneten Meßtaster 8 sowie eine Steuereinheit zur Ansteuerung der Verschiebungseinrichtung.

Das Verzahnungselement kann sowohl durch ein Zahnrad als auch durch ein Ritzel gebildet werden, die entweder gerad- oder schrägverzahnt sind.

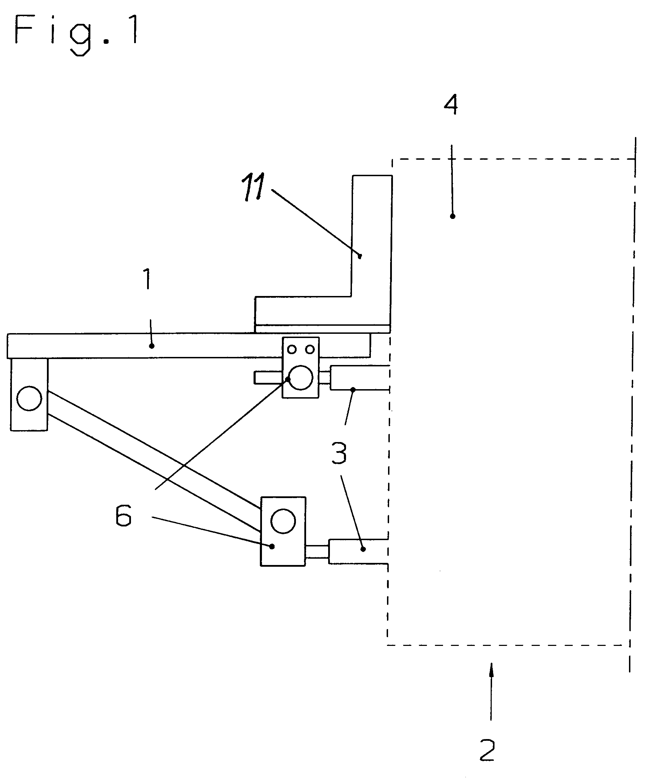

Die Verschiebungseinrichtung 7 ist auf einer in Fig. 1 dargestellten Grundplatte 1 montierbar. Diese Grundplatte ist mit einer zu überprüfenden Verzahnung 2 beispielsweise über Haftmagnete 3 koppelbar. Die einzelnen Haftmagnete können beispielsweise an Zähnen 4 der Verzahnung 2 befestigt werden. Ferner sind geeignete Verstellmittel 6 vorgesehen, um die Grundplatte, beispielsweise mit Hilfe eines Anschlagwinkels 11, senkrecht zur Achse des Verzahnungselementes 2 auszurichten.

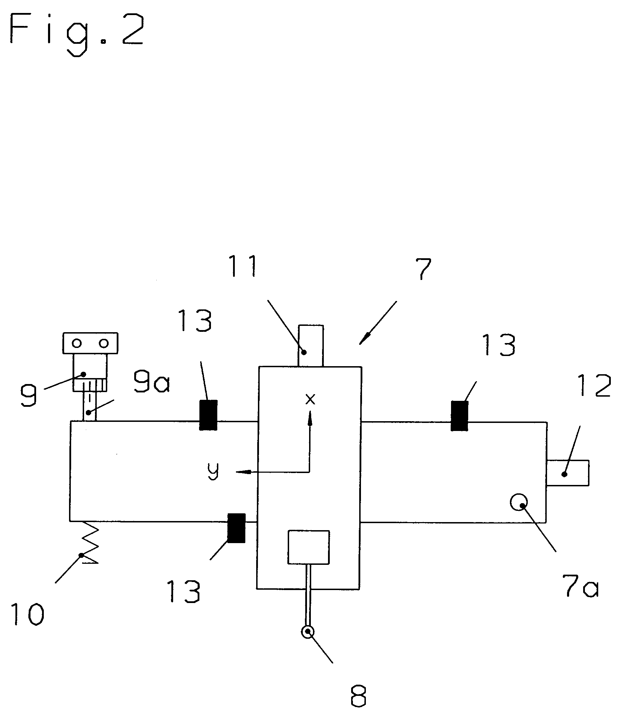

Auf dieser ausgerichteten Grundplatte 1 wird die Verschiebungseinrichtung 7 aufgesetzt, wie sie in Fig. 2 dargestellt ist. Sie wird beispielsweise durch einen allgemein bekannten Kreuzschlitten gebildet, auf dem der zur Abtastung des Evolventenprofils geeignete Meßtaster 8 angeordnet ist. Nachdem die Grundplatte 1 senkrecht zur Achse des Verzahnungselementes ausgerichtet ist, ist der Meßtaster durch die Verschiebungseinrichtung 7 in einem X/Y-Koordinatensystem beweglich, das ebenfalls senkrecht zur Achse des Verzahnungselementes ausgerichtet ist.

Der Meßtaster 8 wird in X- und Y-Richtung mittels Motoren 11 und 12 bewegt, die wiederum mit der nicht dargestellten Steuereinheit in Verbindung stehen.

Die Verschiebungseinrichtung 7 wird auf der Grundplatte 1 mittels geeigneter Klemmen 13 fixiert.

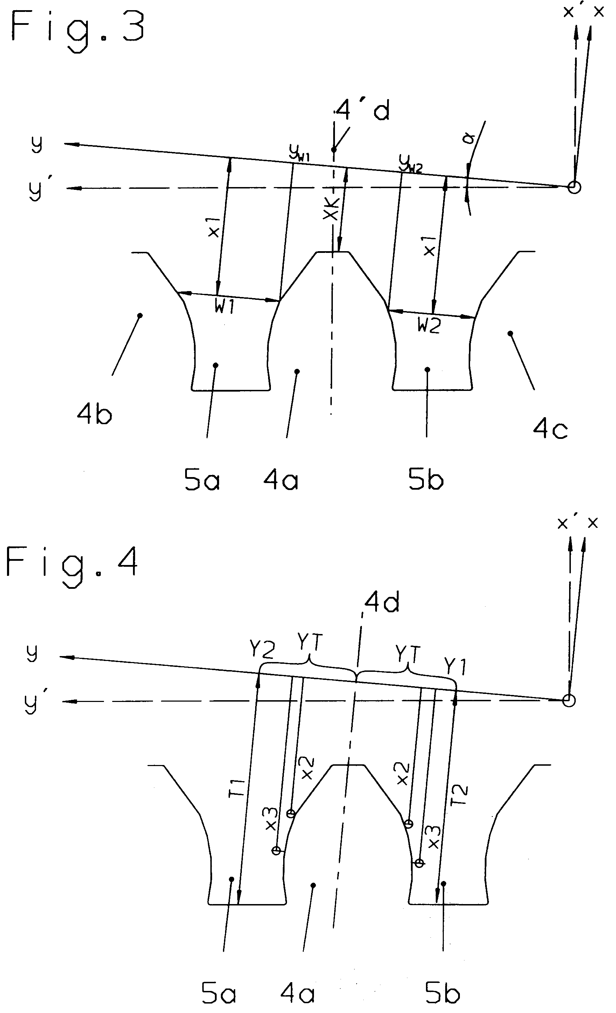

Weiterhin unbestimmt ist jedoch die Lage des X/Y-Koordinatensystems bezüglich der tatsächlichen Mittelachse 4'd eines zu überprüfenden Zahnes 4a (Fig. 3).

Um die Koordinaten einer abgetasteten Zahnflanke des Zahnes 4a mit den Koordinaten der aus den Verzahnungsdaten des Verzahnungselementes zu berechnenden Evolvente vergleichen zu können, muß die Lage des X/Y-Koordinatensystems bezüglich der Mittelachse 4'd des Zahnes 4a bekannt sein.

Zu diesem Zweck wird erfindungsgemäß ein Verfahren zur Korrektur des Ausgangssignals des das Evolventenprofil des Verzahnungselementes 2 überprüfenden Meßtasters angegeben. In dem ersten erfindungsgemäßen Ausführungsbeispiel gemäß Fig. 3 wird für zwei symmetrisch zur Mittelachse 4'd des zu überprüfenden Zahnes 4a liegende Zahnlücken 5a, 5b die Zahnlückenweite W in Y-Richtung gemessen. In dem dargestellten Ausführungsbeispiel ergibt sich für die Zahnlücke 5a eine Zahnlückenweite W1 und für die Zahnlücke 5b eine Zahnlückenweite W2. Bei der Messung in beiden Zahnlücken wird der Meßtaster 8 jeweils um das gleiche Maß X1 in X-Richtung zugestellt.

Das Abstandsmaß XK in X-Richtung auf der Mittelachse 4d zum Kopf des Zahnes 4a wird ebenfalls ermittelt. Die Mittelachse 4d des Zahnes 4a wird dabei durch die Antastpunkte $Y_{W1}$ und $Y_{W2}$ nach folgender Gleichung ermittelt:

$$4d = (Y_{W1} + Y_{W2}) / 2.$$

Aufgrund der gekrümmten Ausbildung der Zahnflanken ergeben sich unterschiedliche Zahnlückenweiten W1 und W2, wenn, wie in diesem Fall, eine der beiden Koordinatenrichtungen (Y-Richtung) einen Winkel $\alpha$ zur Y'-Richtung bildet, die senkrecht zur Mittelachse 4'd ausgerichtet ist. Die Differenz der beiden Meßwerte W1 und W2 wird jedoch zur Korrektur des Meßtasterausgangssignals derart verwendet, daß die Koordinaten einer abgetasteten Zahnflanke in einem X'/Y'-Koordinatensystem angegeben werden können, dessen eine Achse (Y'-Achse) senkrecht zur Mittelachse 4'd des Zahnes 4a ausgerichtet ist. Hierfür gibt es im wesentlichen zwei Vorgehensweisen:

a) entweder wird der Meßtaster 8 zusammen mit der Verschiebungseinrichtung 7 so ausgerichtet, daß der Meßtaster 8 in Y-Richtung senkrecht zur Mittelachse 4'd beweglich ist
b) oder die Korrektur besteht darin, daß die Meßtasterausgangssignale bei der Überprüfung des Evolventenprofils rechnerisch korregiert werden.

Um beide Korrekturmöglichkeiten möglichst exakt durchführen zu können, wird das oben beschriebenen Korrekturverfahren zweckmäßigerweise wenigstens einmal unter Berücksichtigung der zuvor ermittelten Differenz der beiden Meßwerte wiederholt. Die sich dabei möglicherweise noch ergebende Differenz wird unter Berücksichtigung der zuvor ermittelten Differenz ebenfalls bei einer weiteren Durchführung des Korrekturverfahrens bzw. bei dem eigentlichen Überprüfen der Evolvente berücksichtigt. In diesem bevorzugten Ausführungsbeispiel wird somit der Korrekturwert des Meßtasterausgangs-signales iterativ ermittelt.

Erfolgt die Korrektur durch mechanische Ausrichtung der Verschiebungseinrichtung 7, so wird diese zweckmäßigerweise schwenkbeweglich um einen Drehpunkt 7a auf der Grundplatte 1 gehaltert (siehe Fig. 2). Zum Schwenken der Verschiebungseinrichtung 7 um den Drehpunkt 7a ist eine Verstelleinrichtung 9 vorgesehen, die beispielsweise durch eine Mikrometerschraube gebildet werden kann. Der Verstelleinrichtung 9 gegenüberliegend steht eine Druckfeder 10 mit der Verschiebungseinrichtung in Wirkverbindung und hält die Verschiebungseinrichtung 7 in Anschlag mit dem Verstellbolzen 9a der Verstelleinrichtung 9. Aus der Differenz der beiden Meßwerte des Korrekturverfahrens wird ein Verstellmaß berechnet, um die Verschiebungseinrichtung 7 mit Hilfe der Verstelleinrichtung 9 derart auszurichten, daß der Meßtaster 8 in Y-Richtung senkrecht zur Mittelachse 4'd des Zahnes 4a beweglich ist.

Selbstverständlich können im Rahmen der Erfindung auch andere Verstelleinrichtungen 9, beispielsweise eine motorbetriebene Verstellspindel, vorgesehen werden.

Für die Berechnung des Winkels $\alpha$ und des Verstellmaßes gelten folgende Gleichungen:

$$\alpha = \arctan[(W1 - W2) / (2 * (X1 - XK))];$$

$$\text{Verstellmaß} = \tan(\alpha) * \text{Distanz zwischen Drehpunkt 7a und Verstellbolzen 9a}$$

Anhand der Fig. 4 wird nun ein zweites Verfahren zur Korrektur des Ausgangssignales des Meßtasters 8 beschrieben. Dieses zweite Verfahren beruht darauf, daß für die zwei symmetrisch zur Mittelachse 4d des zu prüfenden Zahnes 4a liegenden Zahnlücken 5a, 5b die Zahnlückentiefe T in X-Richtung gemessen wird und die Differenz der beiden Meßwerte zur Korrektur des Meßtasterausgangssignales verwendet wird.

Um exakt in der Mitte der beiden Zahnlücken messen zu können, ist es erforderlich, zunächst die Mittelachse 4d des Zahnes 4 zu ermitteln. Zu diesem Zweck werden die beiden Zahnflanken des Zahnes 4a an jeweils zwei Punkten in zwei unterschiedliche Höhen X2, X3 vermessen. Aus den sich ergebenden vier Koordinatenpunkten wird die Mittelachse 4d ermittelt, die senkrecht zur momentanen Y-Achse verläuft.

Aus den bekannten Verzahnungsdaten für das zu überprüfende Verzahnungselement, wie Modul, Zähnezahl, Kopfkreisdurchmesser, wird der Abstand YT zwischen der Mittelachse 4d und der Mitte einer benachbarten Zahnlücke 5a, 5b berechnet.

Zur Ermittlung der Zahnlückentiefe wird der Meßtaster 8 um den vorgegebenen bzw. berechneten Wert YT auf beide Seiten der Mittelachse 4d verschoben, um dann in X-Richtung die Zahnlückentiefen T1 und T2 der beiden Zahnlücken 5a, 5b zu messen.

Aus den beiden gemessenen Zahnlückentiefen T1, T2 und den beiden Punkten Y1, Y2, die einen Abstand von YT von der Mittelachse 4d aufweisen, läßt sich wiederum die erforderliche Korrektur berechnen. Die eigentliche Korrektur kann dabei wiederum sowohl durch eine mechanische Ausrichtung als auch durch eine rechnerische Kompensierung erfolgen.

Für die Berechnung des Winkels $\alpha$ und des Verstellmaßes gelten folgende Gleichungen:

$$\alpha = \arctan[(T1 - T2) / (Y2 - Y1)];$$

$$\text{Verstellmaß} = \tan(\alpha) * \text{Distanz zwischen Drehpunkt 7a und Verstellbolzen 9a.}$$

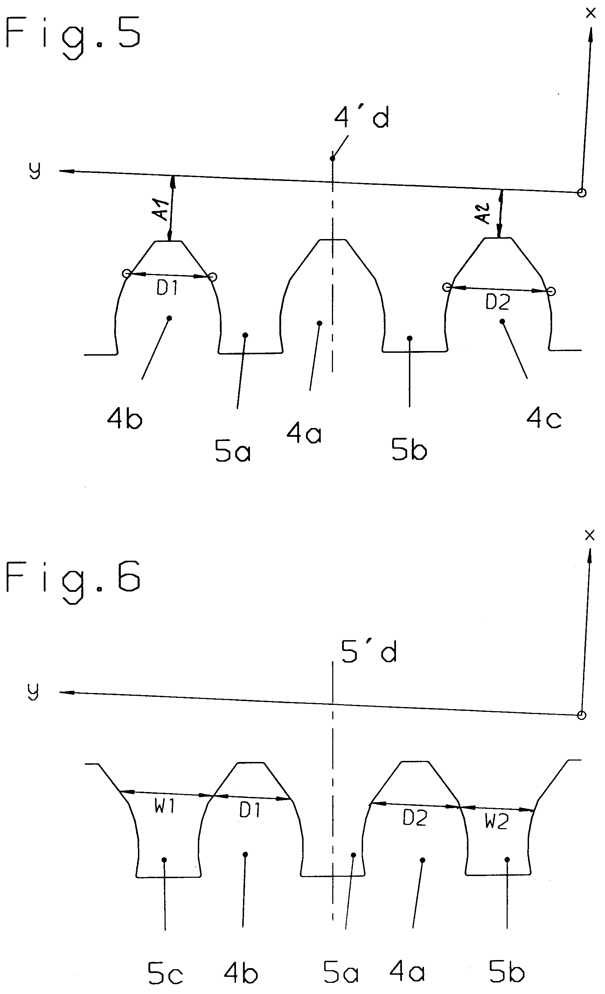

Anhand der Fig. 5 wird ein weiteres, erfindungsgemäßes Verfahren zur Korrektur des Ausgangssignales des Meßtasters 8 veranschaulicht. Auch hier soll letztendlich das Evolventenprofil des Zahnes 4a überprüft werden. Während zur Ermittlung der Korrekturwerte in den vorangegangenen Ausführungsbeispielen jeweils die benachbarten Zahnlücken 5a, 5b vermessen wurden, werden hier die Zahndicken D der beiden symmetrisch zur Mittelachse des Zahnes 4a liegenden Zähne 4b und 4c gemessen. Aufgrund der Tatsache, daß sich die Zahndicke in Richtung Kopfkreis verkleinert, werden sich unterschiedliche Zahndicken D1, D2 ergeben, wenn die Y-Achse nicht senkrecht zur Mittelachse 4'd des Zahnes 4a ausgerichtet ist. Die Differenz der beiden Meßwerte D1, D2 wird, wie bereits oben beschrieben, zur Korrektur des Meßtasterausgangssignales verwendet.

Während die zuvor beschriebenen Korrekturverfahren auf eine Korrektur des Meßtasterausgangssignals im bezug auf die Mittelachse 4'd eines Zahnes 4a ausgerichtet sind, läßt sich das erfindungsgemäße Verfahren selbstverständlich auch auf die Mittelachse 5'd einer zu prüfenden Zahnlücke 5a anwenden. In analoger Weise wird hierbei beispielsweise die Differenz der beiden in Y-Richtung gemessenen Zahndicken D1, D2 der benachbarten Zähne 4a, 4b oder die Zahnlückenweiten W1, W2 der symmetrisch zur Mittelachse 5'd liegenden Zahnlücken 5b, 5c gemessen. Die Differenz der jeweiligen Meßwerte wird wiederum zur Korrektur des Meßtasterausgangssignales verwendet.

Anstatt die symmetrisch zur Mittelachse liegende Zahnlückentiefe zu messen, kann im Rahmen der Erfindung auch der Abstand zu den symmetrisch liegenden Zähnen im Bereich des Kopfkreises ermittelt werden, d. h. daß die Abstände A1, A2 (Fig. 5) zum Kopf der benachbarten Zähne 4b, 4c gemessen werden.

Zweckmäßigerweise wird man jedoch versuchen, die Verschiebungswege des Meßtasters in Y-Richtung möglichst klein zu halten, um dadurch eine möglichst kompakte Ausbildung der Meßvorrichtung zu ermöglichen. Will man beispielsweise das Evolventenprofil eines Zahnes 4a überprüfen, so wird man das Korrekturverfahren zweckmäßigerweise durch Vermessung der unmittelbar benachbarten Zahnlücken 5a und 5b durchführen. In entsprechender Weise wird bei einer Überprüfung des Evolventenprofils von zwei eine Zahnlücke begrenzenden Zahnflanken das Korrekturverfahren an den unmittelbar benachbarten Zähnen durchgeführt.

Durch das erfindungsgemäße Korrekturverfahren ist es möglich, das Meßgerät als transportable Einheit mit einem geringen Transportgewicht und -volumen auszubilden.

## Patentansprüche

1. Verfahren zur Korrektur des Ausgangssignales eines das Evolventenprofil eines Verzahnungselementes (2) überprüfenden Meßtasters (8), der in einem senkrecht zur Achse des Verzahnungselementes angeordneten X/Y-Koordinatensystem beweglich ist,

dadurch gekennzeichnet, daß für zwei symmetrisch zur Mittelachse (4'd; 5'd) eines zu prüfenden Zahnes (4a) bzw. einer zu prüfenden Zahnlücke (5a) liegende Zahnlücken (5a, 5b; 5b, 5c) die Zahnlückentiefe (T1, T2) in X-Richtung und/oder die Zahnlückenweite (W1, W2) in Y-Richtung gemessen wird und die Differenz der beiden Meßwerte zur Korrektur des Meßtasterausgangssignales verwendet wird.

2. Verfahren nach Anspruch 1, dadurch gekennzeichnet, daß die Korrektur darin besteht, daß der Meßtaster (8) in Y-Richtung senkrecht zur Mittelachse (4'd; 5'd) des zu prüfenden Zahnes (4a) bzw. der zu prüfenden Zahnlücke (5a) ausgerichtet wird.

3. Verfahren nach Anspruch 1, dadurch gekennzeichnet, daß die Meßtasterausgangssignale bei der Überprüfung des Evolventenprofils rechnerisch korrigiert werden.

4. Verfahren nach Anspruch 1, dadurch gekennzeichnet, daß das Korrekturverfahren wenigstens einmal unter Berücksichtigung der zuvor ermittelten Differenz wiederholt wird.

5. Verfahren nach Anspruch 1, dadurch gekennzeichnet, daß zunächst die Mittelachse (4d) des zu prüfenden Zahnes (4a) ermittelt wird und der Meßtaster dann zur Ermittlung der Zahnlückentiefe (T1, T2) um einen vorgegebenen Wert (YT) zu beiden Seiten der Mittelachse (4d) verschoben wird.

6. Verfahren nach Anspruch 5, dadurch gekennzeichnet, daß der Zahn zur Bestimmung der Mittelachse (4d) in wenigstens zwei unterschiedlichen Höhen (X2, X3) an beiden Zahnflanken abgetastet wird.

7. Verfahren nach Anspruch 5, dadurch gekennzeichnet, daß der vorgegebene Wert aus den Verzahnungsdaten des Verzahnungselementes derart berechnet wird, daß die Zahnlückentiefe etwa in der Mitte der Zahnlücke ermittelt wird.

8. Verfahren zur Korrektur des Ausgangssignales eines das Evolventenprofil eines Verzahnungselementes (2) überprüfenden Meßtasters (8), der in einem senkrecht zur Achse des Verzahnungselementes angeordneten X/Y-Koordinatensystem beweglich ist,
   daduch gekennzeichnet, daß für zwei symmetrisch zur Mittelachse (4'd; 5'd) eines zu prüfenden Zahnes (4a) bzw. einer zu prüfenden Zahnlücke (5a) liegende Zähne (4b, 4c) die Zahndicke (D1, D2) in Y-Richtung und/oder die Abstände (A1, A2) in X-Richtung zum Kopf der Zähne (4b, 4c) gemessen wird und die Differenz der beiden Meßwerte zur Korrektur des Meßtasterausgangssignals verwendet wird.

9. Vorrichtung zur Überprüfung des Evolventenprofils eines Verzahnungselementes (2), enthaltend

   a) eine in X- und Y-Richtung verschiebbare Verschiebungseinrichtung (7),

   b) einen auf der Verschiebungseinrichtung angeordneten, zur Abtastung des Evolventenprofils geeigneten Meßtaster (8)

   c) sowie eine Steuereinheit zur Ansteuerung der Verschiebungseinrichtung,

   dadurch gekennzeichnet, daß

   d) eine mit der Verschiebungseinrichtung (7) in Wirkzusammenhang stehende Verstelleinrichtung (9) vorgesehen ist, die eine Ausrichtung einer der beiden Verschiebungsrichtungen (Y-Richtung) senkrecht zur Mittelachse (4'd; 5'd) eines zu überprüfenden Zahnes (4a) bzw. einer zu überprüfenden Zahnlücke ermöglicht.

10. Vorrichtung nach Anspruch 9, dadurch gekennzeichnet, daß die Verschiebungseinrichtung (7) drehbar angeordnet ist und die Verstelleinrichtung (9) im Sinne der Drehung der Verschiebungseinrichtung wirkt.

# Fig.1

Fig.2

# Fig.3

# Fig.4

Fig.5

Fig.6